# EUROPEAN PATENT SPECIFICATION

(11) **EP 1 071 565 B1**
(45) Date of publication and mention of the grant of the patent: **09.10.2002**
(21) Application number: 99916079.9
(22) Date of filing: 22.04.1999
(51) Int. Cl.: B60B 17/00

(54) **RAILWAY VEHICLE WHEEL WITH IMPROVED DAMPING CHARACTERISTICS**
SCHIENENFAHRZEUGRAD MIT DÄMPFUNGSEIGENSCHAFTEN
ROUE DE VEHICULE FERROVIAIRE A CARACTERISTIQUES D'AMORTISSEMENT AMELIOREES

(30) Priority: 22.04.1998 NL 1008966
(43) Date of publication of application: 31.01.2001
(73) Proprietor: SKF Engineering & Research Centre B.V., 3430 DT Nieuwegein (NL)
(72) Inventor: IOANNIDES, Eustathios, NL-3706 TB Zeist (NL); WITTMEYER, Henning, Hans, NL-1217 NP Hilversum (NL)
(74) Representative: Jorritsma, Ruurd
(86) International application number: NL9900231
(87) International publication number: WO99054152

(56) References cited:
- EP-A- 0 050 567
- EP-A- 0 082 273
- GB-A- 408 377
- GB-A- 2 033 313
- US-A- 5 183 306

## Description

The invention is related to a railway vehicle wheel, comprising a hub and a tire provided with a flange, which hub and tire are mutually connected by means of a disc or a number of spokes, said tire comprising a thin visco-elastic layer which is circular and concentric to the tire for dissipating vibrations originating from the contact of the railway vehicle wheel with a railway track.

Such a railway vehicle wheel is disclosed in GB-A-2.033.313. Said prior art railway vehicle wheel has a relatively thick resilient layer for i.e. reducing mechanical shock and noise. However, such resilient layer influences the stiffness of railway vehicle wheel considerably.

The object of the invention is to provide a railway vehicle wheel having an improved behaviour in relation to vibration and stiffness. That object is achieved in that the thickness of the visco-elastic layer is of a smaller order of magnitude than the thickness of the tire.

As a result of the relatively small thickness of the visco-elastic layer, the railway vehicle wheel according to the invention has improved damping properties. Said layer however has practically no influence on the radial stiffness of the railway vehicle.

In the wheel according to the invention, visco-elastic material layer is applied that dissipates energy under shear. In particular, vibration energy is thereby damped out quickly despite the small thickness of the layer. Said thickness is of a smaller order of magnitude than the thickness of the tire.

According to the invention, the visco-elastic layer is loaded under shear in the circumferential (or tangential) direction, which provides the required relative displacements in the rubber layer for obtaining the desired damping properties.

The visco-elastic layer is circular and concentric to the tire. Thus, the layer is of a simple and straightforward design, which enables a relatively cheap and easy manufacturing process of the wheel in question.

To optimize the damping, the visco-elastic layer is situated at a distance from the depth at which maximum shear occurs in the tire, said shear resulting from the contact between the tire and the railway track under rolling motion of the wheel on the track. The position to be selected depends on the load on the wheel, which defines the shear stress at each depth, and the fatigue strength of the visco-elastic material.

Said depth is selected as a compromise between the useful life of the layer, and the amount of energy dissipation required. Said dissipation and fatigue are governed by the shear stresses experienced by the visco-elastic layer. Thus, the damping can be adjusted in dependence of the field of application, as a compromise between life and vibration reduction.

In particular, the distance of the visco-elastic layer to the rolling surface of the tire may be smaller than the depth at which maximum shear occurs in the tire.

A reliable construction is obtained in case the tire comprises a main ring body carrying the flange, as well as a concentric ring body, the visco-elastic layer being interposed between the main ring body and the concentric ring body.

Said concentric ring body at the side facing away from the flange is held against coming off from the main ring body by a fixing means. In case the visco-elastic layer would be damaged, the integrity of the railway vehicle wheel in question is still guaranteed so as to provide the required safety in service.

The fixing means may be a fixing ring mounted on the main ring body. Said fixing ring may be mounted onto the main ring body by means of an interference fit.

Other mounting means could be applied as well, such as bolts or adhesives.

Moreover, at least two layers of visco-elastic material are applied, said layers being each surrounded by a concentric ring body.

Moreover, at least two layers of visco-elastic material can be applied.

The invention will be described further with reference to an example of a railway vehicle wheel according to the invention as shown in the figures.

Figure 1 shows a radial cross-section view of the railway vehicle wheel according to the invention.

Figure 2 shows an axial view of a part of the wheel according to figure 1.

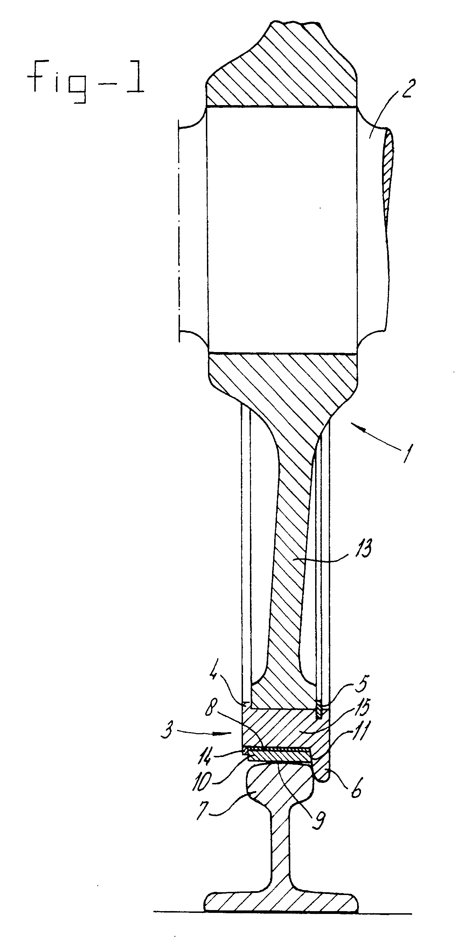

The railway vehicle wheel 1 as shown in figure 1 comprises a hub 2 and a tire 3 which are interconnected by means of connecting disc 13. The tire 3 has an inwardly protruding rim 4, which together with a clamping ring 5 provides the required connection between said tire 3 and the connecting disc 13.

The tire 3 carries a flange 6, for guidance of the railway vehicle wheel with respect to the rail 7.

According to the invention, the tire 3 has a thin layer 8 of a visco-elastic material, at a distance from its rolling surface 9.

In the embodiment shown, the visco-elastic layer 8 is covered by means of a steel ring 10, which rests with its one sideface to the facing surface 11 of flange 6.

The steel ring 10 and the main ring body 15 of the tire 3 are firmly held together by means of a fixing ring 14. Said fixing ring 14 is mounted by means of an interference fit on the main ring body 15, in such a way that the visco-elastic layer 8 as well as the steel ring 10 are held captive between said fixing ring 14 and the flange 6.

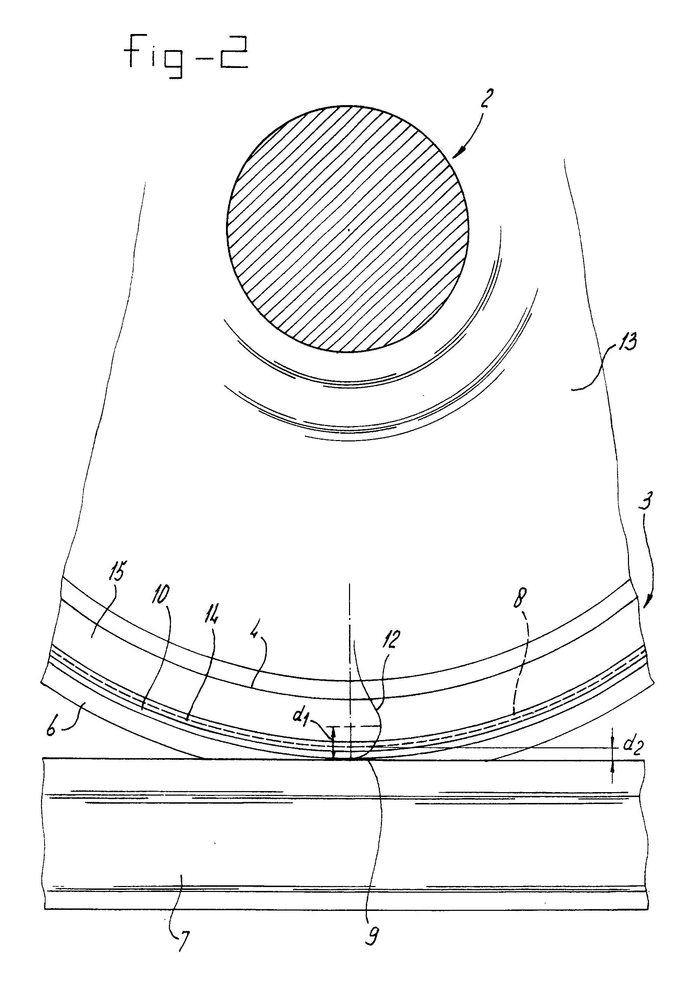

In the axial view of figure 2, wherein the fixing ring 14 has been omitted for reasons of clarity, a part of the railway vehicle wheel has been depicted, together with a part of the railway track 7. Also a schematic representation 12 of the shear stress distribution in the thickness of the wheel, starting from its rolling surface 9, has been given. At the depth d1, the shear stress is at a maximum, but the visco-elastic layer 8 is situated at a distance d2.

At position d2, the shear stresses are somewhat lower, and thereby the damping effect, resulting from the deformations of the visco-elastic layer 8 due to the shear stresses, is somewhat less. On the other hand, the visco-elastic material 8 is exposed to less heavy shear loads, which is beneficial for a longer service life.

Thus, the depth d2 at which the layer of visco-elastic material 8 is situated, has been selected as a compromise between optimized damping and fatigue life.

## Claims

1. Railway vehicle wheel (1), comprising a hub (2) and a tire (3) provided with a flange (6), which hub (2) and tire (3) are mutually connected by means of a disc (13) or a number of spokes, said tire (3) comprising a thin visco-elastic layer (8) which is circular and concentric to the tire (3) for dissipating vibrations originating from the contact of the railway vehicle wheel (1) with a railway track (7), **characterised in that** the thickness of the visco-elastic layer (8) is of a smaller order of magnitude than the thickness of the tire (3).

2. Railway vehicle wheel according to claim 1, wherein the visco-elastic layer (8) is situated at a distance from the depth at which maximum shear occurs in the tire, said shear resulting from the contact between the tire (3) and the railway track (7) under rolling motion of the wheel (1) on the track (7).

3. Railway vehicle wheel according to claim 2, wherein the distance of the visco-elastic layer (8) to the rolling surface (9) of the tire is smaller than the depth at which maximum shear occurs in the tire (3).

4. Railway vehicle wheel according to claim 2 or 3, wherein the distance of the visco-elastic layer (8) to the rolling surface (9) of the tire (3) is selected dependent on the wheel load.

5. Railway vehicle wheel according to claim 2, 3 or 4, wherein the distance of the visco-elastic layer (8) to the rolling surface (9) of the tire (3) is selected dependent on the fatigue strength of the visco-elastic material.

6. Railway vehicle wheel according to any of the preceding claims, wherein the tire (3) comprises a main ring body (15) carrying the flange (6), as well as a concentric ring body (10), the visco-elastic layer being interposed between the main ring body (15) and the concentric ring body (10).

7. Railway vehicle wheel according to claim 6, wherein the concentric ring body (10) at the side facing away from the flange (6) is held against coming off from the main ring body (15) by a fixing means (14).

8. Railway vehicle wheel according to claim 7, wherein the fixing means is a fixing ring (14) mounted on the main ring body (15).

9. Railway vehicle wheel according to claim 8, wherein the fixing ring (14) is mounted onto the main ring body (14) by means of an interference fit.

10. Railway vehicle wheel according to any of the preceding claims, wherein at least two layers of visco-elastic material are applied, said layers being each surrounded by a concentric ring body.

## Patentansprüche

1. Schienenfahrzeugrad (1) mit einer Nabe (2) und einem Reifen (3), der einen Flansch (6) aufweist, wobei Nabe (2) und Reifen (3) gegenseitig mit einer Scheibe (13) oder einer Anzahl von Speichen verbunden sind, der Reifen (3) eine dünne visko-elastische Schicht (8) aufweist, die kreisförmig und konzentrisch zu dem Reifen (3) angeordnet ist, zum Dissipieren der von dem Kontakt des Schienenfahrzeugsrads (1) mit einer Eisenbahnschiene (7) herrührenden Vibrationen,
**dadurch gekennzeichnet, dass**
die Dicke der visko-elastischen Schicht (8) von einer geringeren Größenordnung ist als die Dicke des Reifens (3).

2. Schienenfahrzeugrad nach Anspruch 1, wobei die visko-elastische Schicht (8) in einer Entfernung von der Tiefe angeordnet ist, in der der maximale Schub in dem Reifen auftritt, wobei der Schub aus dem Kontakt zwischen dem Reifen (3) und der Eisenbahnschiene (7) bei einer Rollbewegung des Rads (1) auf der Schiene (7) resultiert.

3. Schienenfahrzeugrad nach Anspruch 2, wobei die Entfernung der visko-elastischen Schicht (8) zu der Rolloberfläche (9) des Reifens kleiner ist als die Tiefe, in der der maximale Schub in dem Reifen (3) auftritt.

4. Schienenfahrzeugrad nach Anspruch 2 oder 3, wobei die Entfernung der visko-elastischen Schicht (8) zu der Rolloberfläche (9) des Reifens (3) abhängig von der Radlast ausgewählt ist.

5. Schienenfahrzeugrad nach Anspruch 2, 3 oder 4, wobei die Entfernung des visko-elastischen Schicht (8) zu der Rolloberfläche (9) des Reifens (3) abhängig von der Zeitfestigkeit des visko-elastischen Werkstoffs ausgewählt ist.

6. Schienenfahrzeugrad nach irgendeinem der vorhergehenden Ansprüche, wobei der Reifen (3) einen Hauptringkörper (15) aufweist, der den Flansch (6) trägt, ebenso wie einen konzentrischen Ringkörper (10), und die visko-elastische Schicht zwischen dem Hauptringkörper (15) und dem konzentrischen Ringkörper (10) zwischengelagert ist.

7. Schienenfahrzeugrad nach Anspruch 6, wobei der konzentrische Ringkörper (10) auf der dem Flansch (6) abgewandten Seite durch eine Fixiereinrichtung (14) gegen ein Abgehen von dem Hauptringkörper (15) festgehalten ist.

8. Schienenfahrzeugrad nach Anspruch 7, wobei die Fixiereinrichtung ein Fixierring (14) ist, der auf dem Hauptringkörper 15) angebracht ist.

9. Schienenfahrzeugrad nach Anspruch 8, wobei der Fixierring (14) auf dem Hauptringkörper (15) mittels einer Presspassung angebracht ist.

10. Schienenfahrzeugrad nach irgendeinem der vorhergehenden Ansprüche, wobei mindestens zwei Schichten von viskoelastischem Material verwendet werden, wobei jede der Schichten von einem konzentrischen Ringkörper umgeben sind.

## Revendications

1. Roue de véhicule de chemin de fer (1), comprenant un moyeu (2) et un bandage (3) muni d'un épaulement (6), ces moyeu (2) et bandage (3) étant raccordés l'un à l'autre au moyen d'un disque (13) ou d'un certain nombre de bras de roue, ledit bandage (3) comprenant une mince couche viscoélastique (8) qui est circulaire et concentrique par rapport au bandage (3) afin de dissiper les vibrations ayant pour origine le contact de la roue du véhicule de chemin de fer (1) avec une voie de chemin de fer (7), **caractérisée en ce que** l'épaisseur de la couche viscoélastique (8) est d'un ordre de grandeur inférieur à l'épaisseur du bandage (3).

2. Roue de véhicule de chemin de fer selon la revendication 1, dans laquelle la couche viscoélastique (8) est située à une certaine distance de la profondeur à laquelle le cisaillement maximum se produit dans le bandage, ledit cisaillement résultant du contact entre le bandage (3) et la voie de chemin de fer (7) à cause du mouvement de roulement de la roue (1) sur la voie (7).

3. Roue de véhicule de chemin de fer selon la revendication 2, dans laquelle la distance entre la couche viscoélastique (8) et la surface de roulement (9) du bandage est inférieure à la profondeur à laquelle le cisaillement maximum se produit dans le bandage (3).

4. Roue de véhicule de chemin de fer selon la revendication 2 ou 3, dans laquelle la distance entre la couche viscoélastique (8) et la surface de roulement (9) du bandage (3) est choisie en fonction de la charge sur la roue.

5. Roue de véhicule de chemin de fer selon la revendication 2, 3 ou 4, dans laquelle la distance entre la couche viscoélastique (8) et la surface de roulement (9) du bandage (3) est choisie en fonction de la résistance à la fatigue du matériau viscoélastique.

6. Roue de véhicule de chemin de fer selon l'une quelconque des revendications précédentes, dans laquelle le bandage (3) comprend un corps d'anneau principal (15) portant l'épaulement (6), ainsi qu'un coprs d'anneau concentrique (10), la couche viscoélastique étant intercalée entre le corps d'anneau principal (15) et le corps d'anneau concentrique (10).

7. Roue de véhicule de chemin de fer selon la revendication 6, dans laquelle le corps d'anneau concentrique (10) sur le côté opposé à l'épaulement (6) est empêché de sortir du corps d'anneau principal (15) grâce à un moyen de fixation (14).

8. Roue de véhicule de chemin de fer selon la revendication 7, dans laquelle le moyen de fixation est un anneau de fixation (14) monté sur le corps d'anneau principal (15).

9. Roue de véhicule de chemin de fer selon la revendication 8, dans laquelle l'anneau de fixation (14) est monté sur le corps d'anneau principal (15) par ajustement avec serrage.

10. Roue de véhicule de chemin de fer selon l'une quelconque des revendications précédentes, dans laquelle au moins deux couches de matériau viscoélastique sont appliquées, lesdites couches étant, chacune, entourée d'un corps d'anneau concentrique.
